# EUROPÄISCHE PATENTANMELDUNG

(11) **EP 4 686 728 A1**
(43) Veröffentlichungstag der Anmeldung: **04.02.2026**
(21) Anmeldenummer: 24192160.0
(22) Anmeldetag: 31.07.2024
(51) Int. Cl.: C08G 65/26, C08G 65/30

(54) **ETHOXYLATE MIT EINEM GERINGEN GEHALT AN POLYETHYLENGLYKOLEN**

(71) Anmelder: BASF SE, 67056 Ludwigshafen am Rhein (DE)
(72) Erfinder: BILLING, Johan Fredrik, 21176 Malmö (SE); FRANK, Jürgen, 64658 Fürth (DE); FUNHOFF, Dirk, 68165 Mannheim (DE); MUSTONEN, Tero, 67056 Ludwigshafen am Rhein (DE); EBERT, Sophia, 67056 Ludwigshafen am Rhein (DE)
(74) Vertreter: BASF IP Association

(57) **Zusammenfassung**

Die vorliegende Erfindung betrifft ein Verfahren zur Herstellung von ethoxylierten Alkanolen mit einem niedrigen Gehalt an Oligo- und Polyethylenglykolen.

## Beschreibung

Die vorliegende Erfindung betrifft ein Verfahren zur Herstellung von ethoxylierten Alkanolen mit einem niedrigen Gehalt an Oligo- und Polyethylenglykolen.

Die Ethoxylierung von Alkanolen erfolgt industriell meist durch Umsetzung der entsprechenden Alkanole mit Ethylenoxid unter Katalyse von Basen, wie beispielsweise Natrium- oder Kaliumhydroxid. Durch diese eingesetzten Basen oder als Inhaltsstoff im Alkanol wird Wasser in die Reaktion eingeführt, das durch Reaktion mit Ethylenoxid zur Bildung von Oligo- und Polyethylenglykolen führt.

In vielen Anwendungen ist die Anwesenheit der Oligo- und Polyethylenglykole nicht nachteilig, da die ethoxylierten Alkanole z.B. für Anwendungen in Tensiden oder Reinigungs- und Waschmitteln später ohnehin mit Polyethylenglykolen versetzt werden.

Das in den Oligoethylenglykolen enthaltene Diethylenglykol ist Ausgangsstoff für die Bildung des toxikologisch bedenklichen Dioxan, wohingegen die hydrophilen höheren Ethylenglykole in den ethoxylierten Alkanolen zu einer Trübung führen. Ferner werden gerade bei niedrig-ethoxylierten Alkanolen, bei denen der hydrophobe Charakter des Alkanols ausgeprägt ist, die Eigenschaften des ethoxylierten Alkanols durch die Anwesenheit der hydrophilen Polyethylenglykole stark beeinflusst.

Dies ist bei den hydrophilen Oligo- und Polyethylenglykolen besonders dann der Fall, wenn es in der Anwendung der im Vergleich dazu relativ hydrophoben ethoxylierten Alkanole auf deren Hydrophobie ankommt, beispielsweise in der Anwendung in einem hydrophoben Medium, etwa der Verteilung oder Dispergierung von Wasser in diesem hydrophoben Medium im Sinne einer w/o-Emulsion (Wasser in Öl).

Speziell Diethylenglykol als Oligo- und Polyethylenglykol ist Ausgangsprodukt für die Bildung von Dioxan, das aus toxikologischen Gründen aus dem Produkt abgetrennt werden sollte. Dioxan wird besonders unter sauren Bedingungen aus Diethylenglykol gebildet, beispielsweise bei der Herstellung von Polyethersulfaten aus ethoxylierten Alkanolen. Somit ist die erfindungsgemäße Abtrennung der Oligo- und Polyethylenglykole dann bevorzugt, wenn das ethoxylierte Alkanol in einer späteren Verwendung oder Derivatisierung sauren Bedingungen ausgesetzt ist, besonders bevorzugt wenn das ethoxylierte Alkanol später in das korrespondierende Polyethersulfat umgesetzt werden soll.

Aufgabe der vorliegenden Erfindung war es, ein Verfahren zur Herstellung von ein- bis dreifach ethoxylierten C₈-C₁₄-Alkanolen zur Verfügung zu stellen, die einen niedrigen Gehalt an Oligo- und Polyethylenglykolen aufweisen.

Dabei können zwei prinzipielle Ansätze verfolgt werden, die auch miteinander kombiniert werden können:
Man kann die Herstellung von ethoxylierten Alkanolen unter solchen Reaktionsbedingungen durchführen, daß weniger Oligo- und Polyethylenglykole gebildet werden als bei der bekannten Katalyse in Gegenwart von Natrium- oder Kaliumhydroxid.

Die Bildung von Polyethylenglykolen ist gemäß der WO 2021/171209 auf die Anwesenheit von Wasser im alkalischen Katalysator zurückzuführen, so dass WO 2021/171209 eine Ethoxylierung in Gegenwart von DMC- (double metal cyanide-) Katalysatoren vorschlägt.

Diese DMC-Katalysatoren sind jedoch aufwendig in der Herstellung.

Alternativ oder zusätzlich können bereits gebildete Oligo- und Polyethylenglykole aus einem Gemisch mit ethoxylierten Alkanolen vollständig oder teilweise entfernt werden.

Die Adsorption von Polyethylenglykolen an Natriumbentonit wurde beispielsweise beschrieben von F. Clegg et al., J. Phys. Chem. B, 2014, 118, 13268-13278. Dabei handelt es sich um ein Tonmineral, das überwiegend Montmorillonit enthält, einem Natrium-Aluminium-Silikat mit der allgemeinen Formel (Na,Ca)_{0,3}(Al,Mg)₂Si₄O₁₀(OH)₂·nH₂O. Clegg et al. beschreiben jedoch lediglich die Adsorption von Polyethylenglykolen aus wäßrigen Lösungen und nicht eine Abtrennung aus einem Reaktionsgemisch mit ähnlichen Verbindungen, wie ethoxylierten Alkanolen. Bei einer einfachen Verwendung von Natriumbentonit in Gemischen aus ethoxylierten Alkanolen und Polyethylenglykolen ist also zu erwarten, dass neben dem Polyethylenglykol auch das Wertprodukt aus dem Reaktionsgemisch entfernt wird.

Die Aufgabe wird gelöst durch ein Verfahren zur Herstellung von ethoxylierten Alkanolen der Formel

R¹-O-[-CH₂-CH₂-O-]ₘ-H

worin
R¹ geradkettiges oder verzweigtes bevorzugt geradkettiges C₈-C₁₄-Alkyl und
m eine rationale Zahl von 1 bis 3
   ist
mit einem niedrigen Gehalt an Oligo- und Polyethylenglykolen der Formel

   HO-[-CH₂-CH₂-O]ₙ-H
worin n eine rationale Zahl von mindestens 2, bevorzugt von 2 bis 20 ist,
wobei man
   (I) mindestens einen Alkanol R¹OH mit mindestens m Äquivalenten Ethylenoxid in Gegenwart mindestens eines (Erd)Alkalimetallalkoholats eines Alkanols R²OH umsetzt,
      wobei R² ein C₁- bis C₄-Alkylrest oder R¹ sein kann,
      und/oder man
   (II) ein Gemisch mindestens eines ethoxylierten Alkanols der Formel

      R¹-O-[-CH₂-CH₂-O-]ₘ-H

      mit Oligo- und Polyethylenglykolen der Formel

         HO-[-CH₂-CH₂-O]ₙ-H
      mit mindestens einem Adsorbens behandelt, ausgewählt aus der Gruppe bestehend aus
(i) Phenol-Formaldehyd-Harzen,
(ii) Kieselgel und
(iii) sauren Ionentauschern in der Kalium-Form.

Die vorliegende Erfindung hat den Vorteil, dass sie gemäß Ausführungsform (I) einerseits mit einem einfachen Katalysator auskommt und andererseits gemäß Ausführungsform (II) etwaiges gebildetes Oligo- und Polyethylenglykol aus dem Reaktionsgemisch entfernt werden kann. Die in Schritt (II) eingesetzten Materialien können darüberhinaus leicht regeneriert werden, so dass sie nach Desorption des Oligo- und Polyethylenglykols mehrmals eingesetzt werden können. Zudem zeigen diese erfindungsgemäß einzusetzenden Materialien eine höhere Effizienz in der Abtrennung der Oligo- und Polyethylenglykole als das aus dem Stand der Technik bekannte Bentonit.

In den obigen Formeln sind
R¹ geradkettiges oder verzweigtes, bevorzugt geradkettiges C₈-C₁₄-Alkyl, bevorzugt C₈-C₁₃-Alkyl, besonders bevorzugt C₉-C₁₃-Alkyl, und ganz besonders bevorzugt C₉-C₁₁-Alkyl,
m eine rationale Zahl von 1 bis 3 und
n eine rationale Zahl von mindestens 2, bevorzugt von 2 bis 30 und besonders bevorzugt von 2 bis 20.

Beispiele für die zugrundeliegenden Alkanole R¹OH sind n-Octanol (Octylalkohol, Caprylalkohol), 2-Ethylhexanol, Nonylalkohol (Pelargonylalkohol), iso-Nonanol, n-Decanol, 2-Propylheptanol, Decylalkohol (Caprinalkohol), Undecylalkohol, Dodecylalkohol (Laurylalkohol), Tridecylalkohol und Tetradecylalkohol (Myristylalkohol).

In einer bevorzugten Ausführungsform handelt es sich um Reinsubstanzen wie beispielsweise 2-Ethylhexanol oder 2-Propylheptanol.

In einer weiteren Ausführungsform kann es sich bei dem zugrundeliegenden Alkanol R¹OH um ein Gemisch verschiedener Alkanole handeln, die im arithmetischen Mittel 8 bis 14, bevorzugt 9 bis 11 Kohlenstoffatome aufweisen. Da es sich um Gemische handelt, kann die Kohlenstoffzahl auch nicht-ganzzahlige Werte annehmen.

Beispiele für derartige Gemische sind Gemische von Fettalkoholen, z.B. solche, die aus Kokosöl erhalten worden sind. Solche Gemische sind überwiegend aus C₈- bis C₁₆-Alkanolen mit geradzahligen Kohlenstoffanzahlen zusammengesetzt, typischerweise 4,6-10,0 Gew% C₈-Alkanol, 5,0-8,0 Gew% C₁₀-Alkanol, 45,1-53,2 Gew% C₁₂-Alkanol, 16,8-21,0 Gew% C₁₄-Alkanol und 7,5-10,2 Gew% C₁₆-Alkanol.

In einer weiteren Ausführungsform handelt es sich bei dem Alkohol R¹-OH um ein Gemisch aus etwa 13 Kohlenstoffatome aufweisenden Alkoholen, besonders bevorzugt um ein solches, das durch Hydroformylierung aus einem C₁₂-Olefingemisch erhältlich ist, das seinerseits durch Oligomerisierung eines Olefingemisches erhältlich ist, das überwiegend vier Kohlenstoffatome aufweisende Kohlenwasserstoffe enthält.

Im statistischen Mittel weist dieses Olefingemisch 11 bis 16 Kohlenstoffatome auf, bevorzugt 11,1 bis 12,9, besonders bevorzugt 11,2 bis 12,8, ganz besonders bevorzugt 11,5 bis 12,5 und insbesondere 11,8 bis 12,2. Die daraus erhaltenen Alkohole weisen dementsprechend ein Kohlenstoffatom mehr auf.

In einer ganz besonders bevorzugten Ausführungsform weist dieser Alkohol R¹-OH einen mittleren Verzweigungsgrad, gemessen als ISO-Index, von 1,8 bis 2,7 auf.

Derartige Gemische sind als Tridecanole oder iso-Tridecanole kommerziell verfügbar.

Besonders bevorzugt handelt es sich um Gemische von linearen Alkoholen, die 9, 10 und 11 Kohlenstoffatome aufweisen. In einer ganz besonders bevorzugten Ausführungsform handelt es sich bei dem Alkanol R¹OH um ein Gemisch primärer Alkohole mit der Zusammensetzung 15-20 Gew% C₉-, 40-45 Gew% C₁₀- und 35 bis 40 Gew% C₁₁-Alkoholen, wobei der Anteil an Alkoholen mit 8 oder weniger bzw. mit 12 oder mehr Kohlenstoffatomen jeweils nicht mehr als 1 Gew% beträgt. Besonders bevorzugt handelt es sich dabei um hochlineare Alkanole, die einen Verzweigungsgrad, gemessen als ISO-Index, von nicht mehr als 0,5, bevorzugt nicht mehr als 0,3, besonders bevorzugt nicht mehr als 0,2 und ganz besonders bevorzugt nicht mehr als 0,1 aufweisen. Das durchschnittliche Molekulargewicht eines solchen Alkoholgemisches beträgt von 158 bis 164 g/mol. Die OH-Zahl beträgt von 342 bis 355 mg KOH/g.

Der Ethoxylierungsgrad m der ethoxylierten Alkanole ist eine rationale Zahl von 1 bis 3, bevorzugt 1,5 bis 3, besonders bevorzugt 1,75 bis 3, ganz besonders bevorzugt 1,75 bis 2,75 und insbesondere 2 bis 2,75.

Bei dem Ethoxylierungsgrad m handelt es sich um ein arithmetisches Mittel, daher kann m auch nicht-ganzzahlige Werte annehmen.

Die Oligo- und Polyethylenglykolen der Formel

HO-[-CH₂-CH₂-O]ₙ-H

werden zumeist bei der Ethoxylierung der Alkanole als Nebenprodukt gebildet.

Bei dem Polymerisationsgrad n handelt es sich ebenfalls um eine rationale Zahl von mindestens 2, bevorzugt von 2 bis 30 und besonders bevorzugt von 2 bis 20. Auch hier handelt es sich um ein arithmetisches Mittel, daher kann n auch nicht-ganzzahlige Werte annehmen.

Der Anteil der Oligo- und Polyethylenglykole in den ethoxylierten Alkanolen variiert und ist zumeist abhängig von dem Wassergehalt in der Ethoxylierung und den Reaktionsbedingungen. Durch das geringe Molekulargewicht von Wasser reichen bereits geringe Mengen Wasser aus, um vergleichsweise hohe Gehalte an Oligo- und Polyethylenglykolen zu bewirken.

Quellen für Wasser sind besonders das eingesetzte Alkanol sowie die als Katalysator eingesetzte Base. Die Base, besonders Natrium- oder Kaliumhydroxid, wird in der Regel als wässrige Lösung eingesetzt, wobei eine anschließende Entfernung nicht vollständig gelingt bzw. unökonomisch ist. Denkbar sind aber auch Luftfeuchtigkeit oder Feuchtigkeitsspuren in einem eventuell verwendeten Schutzgas, Kontaminierung in der eingesetzten Apparatur sowie ein geringer Wassergehalt in dem eingesetzten Ethylenoxid.

Bei Einsatz von Natrium- oder Kaliumhydroxid als Katalysator kann der Gehalt an Oligo- und Polyethylenglykolen in den ethoxylierten Alkanolen von 1 bis zu 5 Gew% betragen.

Wird der Katalysator als wässrige Lösung eingesetzt, werden auch höhere Gehalte an Oligo- und Polyethylenglykolen erreicht.

Durch die Durchführung des erfindungsgemäßen Verfahrens, Schritte (I) und/oder (II), bevorzugt Schritt (II) ist es möglich, diesen Gehalt an Oligo- und Polyethylenglykolen in den ethoxylierten Alkanolen in der Regel um mindestens 10%, bevorzugt mindestens um 15, besonders bevorzugt um mindestens 20 und ganz besonders bevorzugt um mindestens 25% zu verringern. Durch das erfindungsgemäße Verfahren ist es bei Wahl geeigneter Versuchsbedingungen in Schritt (I) und/oder (II) möglich, den Gehalt an Oligo- und Polyethylenglykole auf nicht mehr als 2500 ppm zu senken.

Gegenstand der vorliegenden Erfindung ist ein Verfahren zur Herstellung von ethoxylierten Alkanolen der Formel

R¹-O-[-CH₂-CH₂-O-]ₘ-H

mit einem niedrigen Gehalt an Oligo- und Polyethylenglykolen der Formel

HO-[-CH₂-CH₂-O]ₙ-H

in dem man entweder
(I) mindestens einen Alkanol R¹OH mit mindestens m Äquivalenten Ethylenoxid in Gegenwart mindestens eines (Erd)Alkalimetallalkoholats eines Alkanols R²OH umsetzt, oder
(II) ein Gemisch mindestens eines ethoxylierten Alkanols mit Oligo- und Polyethylenglykolen mit mindestens einem Adsorbens (i), (ii) oder (iii) behandelt,
oder die Schritte (I) und (II) miteinander kombiniert.

In einer bevorzugten Ausführungsform umfasst das erfindungsgemäße Verfahren lediglich den Schritt (I), in dem mindestens ein Alkanol R¹OH mit mindestens m Äquivalenten Ethylenoxid in Gegenwart mindestens eines (Erd)Alkalimetallalkoholats eines Alkanols R²OH umgesetzt wird.

In einer weiteren bevorzugten Ausführungsform umfasst das erfindungsgemäße Verfahren lediglich den Schritt (II), in dem ein beliebig hergestelltes Gemisch mindestens eines ethoxylierten Alkanols mit Oligo- und Polyethylenglykolen mit mindestens einem Adsorbens (i), (ii) oder (iii) behandelt wird.

In einer dritten Ausführungsform kann man die Schritte (I) und (II) kombinieren und zunächst in Schritt (I) mindestens einen Alkanol R¹OH mit mindestens m Äquivalenten Ethylenoxid in Gegenwart mindestens eines (Erd)Alkalimetallalkoholats eines Alkanols R²OH umsetzen und das so erhaltene Reaktionsgemisch, bevorzugt nach Entfernung von unumgesetztem Ethylenoxid, in einem Schritt (II) mit mindestens einem Adsorbens (i), (ii) oder (iii) behandeln.

### (I) Ethoxylierung

Gemäß einer Ausführungsform der vorliegenden Erfindung wird mindestens ein Alkanol R¹OH mit mindestens m Äquivalenten Ethylenoxid in Gegenwart mindestens eines (Erd)Alkalimetallalkoholats eines Alkanols R²OH umgesetzt, wobei R² ein C₁- bis C₄-Alkylrest oder R¹ sein kann.

Bei dem (Erd)Alkalimetall handelt es sich bevorzugt um Natrium, Kalium, Magnesium oder Calcium, besonders bevorzugt Natrium oder Kalium, ganz besonders bevorzugt Natrium.

Unter den C₁-C₄-Alkoholaten des Alkanols R²OH sind die Methanolate oder Ethanolate der (Erd)Alkalimetalle besonders bevorzugt, besonders des Natrium oder Kalium.

In einer bevorzugten Ausführungsform wird erfindungsgemäß das (Erd)Alkalimetallalkoholat des Alkanols R¹OH als Katalysator eingesetzt.

Dieses kann prinzipiell auf zwei Wegen hergestellt werden:
Man kann zu dem Alkanol R¹OH ein (Erd)Alkalimetallalkoholat des Alkanols R²OH hinzugeben, so dass im Reaktionsgemisch die Alkoholate der Alkanole R¹OH und R²OH im Gleichgewicht stehen. Aus diesem Gleichgewicht kann das niedriger siedende Alkanol R²OH entfernt, bevorzugt abdestilliert und/oder herausgestrippt werden, beispielsweise durch Strippen mit Argon, sauerstoffabgereicherter Luft oder Stickstoff, bevorzugt mit Stickstoff, so dass das Gleichgewicht auf die Seite des gewünschten Alkoholats des Alkanols R¹OH verschoben wird. Die Destillation kann bevorzugt unter verringertem Druck durchgeführt werden, beispielsweise bis zu 500 mbar, bevorzugt bis zu 300, besonders bevorzugt bis zu 200, ganz besonders bevorzugt bis zu 100 und insbesondere bis zu 50 mbar.

Bevorzugt wird das (Erd)Alkalimetallalkoholat des Alkanols R¹OH jedoch hergestellt, indem man das Alkanol R¹OH mit metallischem (Erd)Alkalimetall, bevorzugt metallischem Natrium oder Kalium, besonders bevorzugt metallischem Natrium zum korrespondierenden Alkoholat des Alkanols R¹OH umsetzt.

Diese Umsetzung erfolgt beispielsweise bei einer Temperatur von Umgebungstemperatur bis zu 120 °C, bevorzugt bis zu 110, ganz besonders bevorzugt bis zu 100 und insbesondere bis zu 90 °C über eine Reaktionsdauer beispielsweise bis zu 4 Stunden, bevorzugt bis zu 3 und besonders bevorzugt bis zu 2 Stunden.

Es ist von besonderem Vorteil, wenn die eingesetzten Materialien vor der Reaktion weitestgehend von Wasser befreit werden, also die Alkanole R¹OH oder R²OH, sowie eventuell eingesetztes Strippgas.

Dies kann durch bekannte Trocknungsmittel erfolgen, beispielsweise Molsiebe, Natriumsulfat, Kalziumchlorid oder Kieselgel, aber auch durch Umkehrosmose, Destillation oder azeotrope Destillation.

Vervollständigt wird diese Trocknung durch einen Überschuss an (Erd)Alkalimetallalkoholat des Alkanols R²OH oder des (Erd)Alkalimetalls.

Dadurch ist es möglich, den Wassergehalt der Einsatzmaterialien auf nicht mehr als 1000 Gew.ppm zu senken, bevorzugt nicht mehr als 750, besonders bevorzugt nicht mehr als 500, ganz besonders bevorzugt nicht mehr als 350 und insbesondere nicht mehr als 250 Gew.ppm zu verringern. Je geringer der Gehalt an Wasser in den Einsatzmaterialien ist, desto weniger Oligo- und Polyethylenglykole bilden sich.

Die Ethoxylierung erfolgt in der Regel, indem man das Alkanol R¹OH und Ethylenoxid in Gegenwart mindestens eines (Erd)Alkalimetallalkoholats eines Alkanols R²OH in einem Molverhältnis von 1 zu mindestens m, bevorzugt genau 1 zu m umsetzt.

Die Umsetzung mit dem Ethylenoxid kann bei 50 bis 200 °C durchgeführt werden. Bevorzugt ist ein Temperaturbereich von 100 bis 180 °C, insbesondere von 120 bis 160 °C.

Die Ethoxylierung kann sowohl bei Atmosphärendruck, Unterdruck, als auch bei erhöhtem Druck, beispielsweise bei einem Druck von 0,8 bis 50 bar (abs), insbesondere bei einem Druck von 1 bis 10 bar (abs) durchgeführt werden. Speziell ist ein leichter Überdruck bis 2 bar (abs) vorteilhaft.

Das mindestens eine (Erd)Alkalimetallalkoholat des Alkanols R²OH wird in Mengen von 0,5 bis 5 mol% bezogen auf das Alkanol R¹OH eingesetzt, bevorzugt 0,75 bis 4 und besonders bevorzugt 1 bis 3 mol%.

Die Ethoxylierung wird bevorzugt unter einer Inertgasabdeckung durchgeführt, beispielsweise durch Stickstoff, Argon, Kohlenstoffdioxid oder Magerluft, also Sauerstoff-abgereicherter Luft, bevorzugt Stickstoff.

Im Inertgas können geringe, sicherheitstechnisch unbedenkliche Anteile molekularer Sauerstoff oder Stickstoffmonoxid anwesend sein, so dass die Explosionsgrenze des Ethylenoxids nicht überschritten wird, beispielsweise weniger als 5 Vol%, bevorzugt weniger als 2 Vol%, besonders bevorzugt weniger als 1 Vol% und ganz besonders bevorzugt weniger als 0,5 Vol%.

Es ist für das Verfahren nicht notwendig, Lösungsmittel für die Umsetzung zu verwenden. Es ist aber möglich, wenn auch weniger bevorzugt, das Verfahren in Gegenwart von organischen Lösungsmitteln wie beispielsweise aliphatischen, cycloaliphatischen oder aromatischen Kohlenwasserstoffen, Ethern, Acetalen, Ketonen, Estern oder cyclischen Carbonaten durchzuführen.

Nach Beendigung der Ethoxylierung wird etwaiges unumgesetztes Ethylenoxid entfernt, meist durch eine Kombination von Strippen mit einem inerten Gas, bevorzugt Argon, sauerstoffabgereicherter Luft oder Stickstoff, bevorzugt mit Stickstoff und Entgasung unter verringertem Druck, beispielsweise bis zu 500 mbar, bevorzugt bis zu 300, besonders bevorzugt bis zu 200, ganz besonders bevorzugt bis zu 100 und insbesondere bis zu 50 mbar bei erhöhter Temperatur, beispielsweise bis zu 120 °C, bevorzugt bis zu 100 und besonders bevorzugt bis zu 80 °C.

Das basische Salz wird bevorzugt anschließend vom Reaktionsgemisch abgetrennt, beispielsweise durch Sedimentieren, Filtrieren per Fritte, Filter oder ein Sieb, Zentrifugieren oder Absorption, bevorzugt durch Filtration, was gegebenenfalls durch ein Filtrierhilfsmittel wie beispielsweise Celite, Aluminiumoxid, Silikate, Kieselgel oder Aktivkohle unterstützt werden kann.

Verfahren zur Ethoxylierung sind allgemein beschrieben in M. lonescu: Chemistry and Technology of Polyols for Polyurethanes, Rapra Technology Limited, 2005, ISBN:1-85957-491-2.

Die Umsetzung kann diskontinuierlich im Sinne eines Batch- oder Semi-Batch-Verfahrens oder kontinuierlich durchgeführt werden. Sie kann in einem Rührreaktor, Rohrreaktor, Schlaufenreaktor, in einem Festbettreaktor oder in einem Fließbettreaktor durchgeführt werden.

Es ist auch möglich, mehrere der genannten Reaktionsapparate hintereinander zu schalten. Dadurch kann das Verfahren in mehreren Verfahrensstufen betrieben werden. Es ist auch möglich, innerhalb einer Verfahrensstufe mehrere Reaktoren parallel zu betreiben.

Die Reaktionswärme kann hierbei beispielsweise über einen Reaktormantel, über aufgeschweißte Halbrohrschlangen oder Rohrschlangen, über Kühlrohre im Reaktor, nachfolgende oder vorgeschaltete Wärmetauscher, einen Totalkondensator bei Siedefahrweise, oder eine beliebige Kombination der genannten Varianten abgeführt werden.

Die Reaktionsmischung wird bei der kontinuierlichen Fahrweise im Kreislauf gefahren. Das erfolgt üblicherweise durch Umpumpen der Reaktionsmischung über einen äußeren Kreislauf. In diesen äußeren Kreislauf kann auch ein Wärmetauscher eingebaut sein.

Die Reaktionswärme kann hierbei beispielsweise über einen Reaktormantel, über aufgeschweißte Halbrohrschlangen oder Rohrschlangen, über Kühlrohre im Reaktor, nachfolgende oder vorgeschaltete Wärmetauscher, einen Totalkondensator bei Siedefahrweise, oder eine beliebige Kombination der genannten varianten abgeführt werden.

Durch den erfindungsgemäßen Einsatz des (Erd)Alkalimetallalkoholats eines Alkanols R²OH ist es möglich, den Gehalt an Oligo- und Polyethylenglykolen im Reaktionsgemisch gering zu halten.

In der Regel kann durch diese erfindungsgemäße Reaktionsführung des Schritts (I) bei Verwendung von Einsatzstoffen, deren Gehalt an Wasser reduziert wurde, der Gehalt an Oligo- und Polyethylenglykolen in den ethoxylierten Alkanolen auf unter 1 Gew% verringert werden, bevorzugt auf nicht mehr als 0,9, besonders bevorzugt auf nicht mehr als 0,75, ganz besonders bevorzugt auf nicht mehr als 0,67, insbesondere auf nicht mehr als 0,5 und speziell auf nicht mehr als 0,4 Gew%.

Um den Gehalt an Oligo- und Polyethylenglykolen noch weiter zu verringern ist es möglich, das aus Schritt (I) erhaltene Gemisch aus Oligo- und Polyethylenglykolen und ethoxylierten Alkanolen zusätzlich noch dem Schritt (II) zu unterziehen.

Sollte der eventuell im Reaktionsgemisch verbliebene Gehalt an (Erd)Alkalimetallionen in der geplanten Anwendung stören, so ist es möglich, das Reaktionsgemisch einer Wäsche zu unterziehen, bevorzugt mit Wasser oder einem leicht sauren Medium.

Alternativ oder zusätzlich kann der Gehalt an (Erd)Alkalimetallionen aber auch per Filtration über ein Filtrierhilfsmittel entfernt werden, wie beispielsweise Celite, Aluminiumoxid, Silikate oder Kieselgel.

### (II) Behandlung mit Adsorbens

Gemäß dem erfindungsgemäßen Schritt (II) wird ein Gemisch mindestens eines ethoxylierten Alkanols mit Oligo- und Polyethylenglykolen mit mindestens einem Adsorbens (i), (ii) oder (iii) behandelt, ausgewählt aus der Gruppe bestehend aus
(i) Phenol-Formaldehyd-Harzen,
(ii) Kieselgel und
(iii) sauren Ionentauschern in der Kalium-Form.

### Phenol-Formaldehyd-Harz

Phenol-Formaldehyd-Harze (PFH) werden als Adsorbens in einer Vielzahl von Anwendungen eingesetzt, da sie eine hohe spezifische Oberfläche und eine poröse Struktur aufweisen. Die Auswahl des geeigneten PFH-Adsorbens hängt von verschiedenen Faktoren ab, wie z. B. der gewünschten Anwendung, den zu adsorbierenden Verunreinigungen und den erforderlichen physikalischen Eigenschaften des Adsorbens.

Die Herstellung der Phenol-Formaldehyd-Harze erfolgt durch die Polymerisation von Phenol oder substituierten Phenolen und Formaldehyd in Gegenwart von Katalysatoren, wie Säuren oder Basen. Verschiedene Ausgangsstoffe können verwendet werden, um die Eigenschaften des Phenol-Formaldehyd-Harzes zu beeinflussen. Zum Beispiel kann die Verwendung von Phenol mit verschiedenen Substituenten zu Phenol-Formaldehyd-Harzen mit unterschiedlichen chemischen und physikalischen Eigenschaften führen.

Beispiele für Phenole mit verschiedenen Substituenten sind:
ortho-Cresol, meta-Cresol und para-Cresol
Xylenole: 2,3-, 2,4-, 2,5-, 2,6-, 3,4- und 3,5-Dimethylphenol und deren Isomerengemische Alpha- und beta-Naphthol
Brenzcatechin (1,2-Dihydroxyphenol), Resorcinol (1,3-Dihydroxyphenol) und Hydrochinon (1,4-Dihydroxyphenol)
2-, 3- oder 4-Methoxyphenol

Zusätzlich zu den Cresolen und Xylenolen können auch ein- oder zweifach C₂- bis C₁₂-Alkyl-substituierte Phenole eingesetzt werden, bevorzugt einfach substituiert, besonders bevorzugt überwiegend in para-substituiert. Durch diese Alkylsubstitution kann das Phenol-Formaldehyd-Harz hydrophober gestaltet werden, um so hydrophobere Verunreinigungen zu adsorbieren.

Bevorzugt wird Phenol eingesetzt.

Diese Phenole mit verschiedenen Substituenten bieten die Möglichkeit, die chemischen und physikalischen Eigenschaften des PFH-Adsorbens zu variieren. Durch die Kombination verschiedener Phenole oder die Verwendung eines einzigen Phenols können PFH-Adsorbens mit unterschiedlichen Porenstrukturen, spezifischen Oberflächen und Adsorptionskapazitäten hergestellt werden. Die Auswahl des geeigneten Phenols mit den entsprechenden Substituenten hängt von den spezifischen Anforderungen der Anwendung ab.

Die Porosität der Phenol-Formaldehyd-Harze wird von verschiedenen Faktoren beeinflusst:
Verhältnis von Phenol zu Formaldehyd: Das Verhältnis von Phenol zu Formaldehyd bei der Polymerisation hat einen signifikanten Einfluss auf die Porosität des resultierenden Phenol-Formaldehyd-Harzes. Ein höherer Anteil an Phenol führt in der Regel zu einer höheren Porosität, da dies zu einer größeren Anzahl an Polymerketten und somit zu einer größeren Anzahl an Poren führt.

Katalysatoren: Die Art und Menge der eingesetzten Katalysatoren können die Porosität von Phenol-Formaldehyd-Harzen beeinflussen. Katalysatoren wie Säuren oder Basen initiieren die Polymerisation von Phenol und Formaldehyd und beeinflussen somit die Vernetzung und die Porenstruktur des Phenol-Formaldehyd-Harzes. Eine ausreichende Porosität gewährleistet eine gute Zugänglichkeit der aktiven Oberflächenstellen und einen effizienten Transport der zu adsorbierenden Verbindung in das Innere des Adsorbens.

Polymerisationsbedingungen: Die Bedingungen während der Polymerisation, wie Temperatur, Reaktionszeit und Druck, können die Porosität von Phenol-Formaldehyd-Harzen beeinflussen. Eine höhere Polymerisationstemperatur kann zu einer größeren Porengröße führen, während eine längere Reaktionszeit eine höhere Porosität ermöglichen kann.

Verwendung von Templat-Molekülen: Die Verwendung von Templat-Molekülen während der Polymerisation kann die Porosität von Phenol-Formaldehyd-Harzen steuern. Template-Moleküle dienen als Formgeber und beeinflussen die Porengröße und -struktur des Phenol-Formaldehyd-Harzes. Sie werden während der Polymerisation eingeführt und nach der Reaktion entfernt, wodurch die Porenstruktur des Phenol-Formaldehyd-Harzes erhalten bleibt.

Trocknungs- und Aushärtungsbedingungen: Die Art und Dauer der Trocknung und Aushärtung von Phenol-Formaldehyd-Harzen können ebenfalls die Porosität beeinflussen. Eine gründliche Trocknung und Aushärtung ermöglichen eine optimale Entwicklung der Porenstruktur und Porosität.

Diese Faktoren sind eng miteinander verbunden und können kombiniert werden, um die gewünschte Porosität von Phenol-Formaldehyd-Harzes zu erreichen. Die genaue Kontrolle dieser Faktoren ermöglicht es, die Porosität des PFH-Adsorbens entsprechend den spezifischen Anforderungen der Anwendung anzupassen.

Für die Synthese von Phenol-Formaldehyd-Harzen (PFH) als Adsorbens wird in der Regel ein bestimmtes Verhältnis von Phenol zu Formaldehyd verwendet. Das genaue Verhältnis kann je nach den gewünschten Eigenschaften des PFH-Adsorbens variieren, besonders der Porosität und Porenstruktur, siehe oben, aber typischerweise wird ein Molverhältnis von 1:1 bis 1:2 von Phenol zu Formaldehyd eingesetzt.

Das Verhältnis beeinflusst die Vernetzung und die Struktur des PFH-Adsorbens, was wiederum die Porosität, die spezifische Oberfläche und die Adsorptionskapazität beeinflusst.

Ein höheres Molverhältnis von Phenol zu Formaldehyd (z. B. bis zu 1:2) kann zu einer größeren Anzahl an Polymerketten und somit zu einer höheren Porosität und spezifischen Oberfläche führen. Dies ermöglicht eine effizientere Adsorption von Verunreinigungen. Jedoch kann ein zu hohes Molverhältnis auch zu einer erhöhten Vernetzung führen, was die Porengröße verringern und die Adsorptionskapazität beeinträchtigen kann.

Ein niedrigeres Molverhältnis von Phenol zu Formaldehyd (z. B. bis zu 1:1) kann zu einer geringeren Vernetzung führen und somit zu größeren Poren und einer höheren Adsorptionskapazität führen. Es ist jedoch wichtig, das Verhältnis sorgfältig zu kontrollieren, um eine ausreichende Vernetzung und strukturelle Stabilität des PFH-Adsorbens sicherzustellen.

Das Molekulargewicht von PFH-Adsorbens liegt typischerweise im Bereich von einigen tausend bis zu mehreren hunderttausend Dalton. Ein höheres Molekulargewicht kann zu einer größeren Porengröße und einer höheren spezifischen Oberfläche führen, was eine erhöhte Adsorptionskapazität ermöglicht. Das Molekulargewicht wird so gewählt, dass das PFH-Adsorbens ein festes Polymer bildet, damit es thermisch und mechanisch stabil und handhabbar ist.

Die Porosität des PFH-Adsorbens gewährleistet eine gute Zugänglichkeit der aktiven Oberflächenstellen und einen effizienten Transport der Verunreinigungen in das Innere des Adsorbens. Generell wird eine mesoporöse bis makroporöse Struktur bevorzugt, da sie eine gute Balance zwischen Oberfläche und Zugänglichkeit bietet.

Eine hohe spezifische Oberfläche des Adsorbens weist eine große Anzahl von aktiven Stellen auf, an denen Verunreinigungen adsorbiert werden können. Eine hohe spezifische Oberfläche verbessert die Adsorptionskapazität und ermöglicht eine effektive Entfernung von Verunreinigungen.

Bevorzugt werden solche Phenol-Formaldehyd-Harze eingesetzt, die eine spezifische Oberfläche (BET Isotherme) von 100 bis 400, bevorzugt 125 bis 300, besonders bevorzugt 150 bis 250 m²/g aufweisen.

Das Porenvolumen (bestimmt per N₂-Isotherme) sollte von 0,7 bis 1,5, bevorzugt 0,8 bis 1,3 und besonders bevorzugt 0,9 bis 1,2 ml/g betragen.

Der durchschnittliche Porendurchmesser (berechnet aus der N₂-Isothermen) liegt bevorzugt von 400 bis 800 Ängström, besonders bevorzugt von 500 bis 700 und ganz besonders bevorzugt von 550 bis 650 Ängström.

Das Adsorbens aus Phenol-Formaldehyd-Harz wird als polymerer Feststoff eingesetzt, der beliebige geometrische Form aufweisen kann, beispielsweise Splitt, Granulat, Kugeln, Tabletten oder Stränge, bevorzugt Splitt, Granulat oder Stränge und besonders bevorzugt Splitt oder Granulat.

Solche Adsorbentien aus Phenol-Formaldehyd-Harz sind kommerziell verfügbar. Ein bevorzugtes Beispiel für ein solches Adsorbens ist AmberLite^{™} XAD^{™}761, hergestellt durch die Firma DuPont.

Die Phenol-Formaldehyd-Harze können getrocknet oder vorbenetzt eingesetzt werden. Welcher Zustand für die gewünschte Adsorption vorteilhaft ist, kann durch einfach Vorversuche geprüft werden.

### Kieselgel

Kieselgel ist ein häufig verwendetes Adsorbens, wobei es sich um ein amorphes Silikatmaterial handelt, das aufgrund seiner porösen Struktur eine große innere Oberfläche aufweist. In der Regel handelt es sich um amorphes Siliciumdioxid, denkbar, wenn auch weniger bevorzugt sind Aluminium- oder Titansilikate.

Die spezifische Oberfläche gibt die Gesamtfläche des Materials pro Einheit Masse oder Volumen an. Eine hohe spezifische Oberfläche ermöglicht eine größere Anzahl von Adsorptionsstellen und somit eine höhere Adsorptionskapazität. Ein Kieselgel mit einer hohen spezifischen Oberfläche ist daher für viele Adsorptionsprozesse von Vorteil.

Für die erfindungsgemäße Anwendung kann die innere (spezifische) Oberfläche bis zu 600 m²/g betragen (N₂-Isotherme, sBET), bevorzugt von 300 bis 600, besonders bevorzugt von 400 bis 550 m²/g.

Bevorzugt weist das Kieselgel eine Mischung aus Makroporosität und Mikroporosität auf, wobei die Porengröße bestimmt, welche Art von Molekülen adsorbiert werden können.

Bevorzugt beträgt die Porengröße (berechnet aus der N₂-Isothermen) von 4 bis 9 nm, besonders bevorzugt von 4,5 bis 8 und ganz besonders bevorzugt von 5 bis 7,5 nm. Das Porenvolumen (N₂-Isotherme) beträgt bevorzugt von 0,5 bis 1,0, besonders bevorzugt 0,6 bis 0,8 und ganz besonders bevorzugt 0,7 bis 0,85 ml/g.

Die Teilchengröße des Kieselgels kann dabei variieren von 35 bis 500 µm, bevorzugt 40 bis 200 und besonders bevorzugt 60 bis 200 µm.

Zur einfacheren Handhabbarkeit können diese Kieselgelpartikel auch zu größeren Strukturen geformt werden, beispielsweise Splitt, Granulat, Kugeln, Tabletten oder Stränge, bevorzugt Splitt, Granulat oder Stränge und besonders bevorzugt Splitt oder Granulat.

### Saure lonentauscher in der Kalium-Form

Saure lonentauscher sind zumeist solche, die Carboxyl- oder Sulfonsäuregruppen, bevorzugt Carbonsäuregruppen in einer Polymermatrix, häufig eine Polymermatrix auf Basis Polystyrol, Poly(meth)acrylaten oder Poly(meth)acrylsäure tragen. Unter den sauren Ionentauschern sind die stark sauren lonentauscher bevorzugt, insbesondere solche, deren Acidität durch Sulfonsäuregruppen bestimmt wird. Ganz besonders solche auf Basis Polystyrol, vernetzt mit Divinylbenzol.

Die Säuregruppen, bevorzugt Carboxyl- oder Sulfonsäuregruppen, besonders bevorzugt Sulfonsäuregruppen liegen in sauren Ionentauschern in der Lieferform meist in saurer Form oder als Metallsalz, insbesondere mit Natriumionen als Gegenion vor.

Die erfindungsgemäß einsetzbaren sauren lonentauscher liegen in der Kalium-Form vor, was bedeutet, dass mindestens 10% der sauren Gruppen im lonentauscher ein Kaliumion als Gegenion tragen, bevorzugt mindestens 25%, besonders bevorzugt mindestens 50%, ganz besonders bevorzugt mindestens 66% und insbesondere 75%. Der Neutralisierungsgrad kann bis zu 100% betragen, bevorzugt bis zu 98 und besonders bevorzugt bis zu 95%.

Der saure lonentauscher kann beliebige geometrische Form aufweisen, beispielsweise Splitt, Granulat, Kugeln, Tabletten oder Stränge, bevorzugt Kugeln oder Granulat und besonders bevorzugt Kugeln.

Der Durchmesser der Teilchen ist erfindungsgemäß weniger relevant und kann beispielsweise von 200 bis 1500 µm betragen, bevorzugt von 250 bis 1400, besonders bevorzugt von 300 bis 1200 µm betragen.

Die Kapazität an sauren Gruppen beträgt in der Regel von 1 bis 5 eq/l, bevorzugt von 1,2 bis 4, besonders bevorzugt von 1,5 bis 3 eq/l.

Die spezifische Oberfläche (N₂-Isotherme) kann von 500 bis 1500 m²/g betragen, bevorzugt von 550 bis 1400 und besonders bevorzugt von 600 bis 1300 m²/g.

Auch die lonentauscher weisen Meso-, Makro- und/oder Transportporen auf, die sich aus der N₂-Adsorption bestimmen lassen. Deren Durchmesser kann beispielsweise von 50 bis 500 Ängström bestragen, bevorzugt von 60 bis 450, besonders bevorzugt von 70 bis 400 Ängström.

Der Porendurchmesser der Mikroporen (berechnet aus der N₂-Isothermen) beträgt beispielsweise von 10 bis 20 Ängström, bevorzugt 12 bis 18 und besonders bevorzugt 13 bis 17 Ängström.

Das Porenvolumen (N₂-Isotherme) kann von 0,1 bis 2,5 ml/g betragen, bevorzugt von 0,2 bis 2,2, besonders bevorzugt von 0,3 bis 2,0 ml/g.

### Behandlung in Gegenwart des Adsorbens

Erfindungsgemäß werden die Oligo- und Polyethylenglykol-haltigen ethoxylierten Alkanole mit mindestens einem der oben genannten Adsorbentien behandelt, um den Gehalt an Oligo- und Polyethylenglykolen zu verringern. Die nach konventionellen Verfahren, bevorzugt in Gegenwart von Natrium- oder Kaliumhydroxid als Katalysator ethoxylierten Alkanole, enthalten in der Regel einen Gehalt an Oligo- und Polyethylenglykolen von 1 bis zu 5 Gew% (bezogen auf die Menge an ethoxylierten Alkanolen).

Das Gemisch aus ethoxylierten Alkanolen und Oligo- und Polyethylenglykolen kann weiterhin noch mindestens ein Lösungsmittel enthalten, beispielsweise aliphatische, cycloaliphatische oder aromatische Kohlenwasserstoffe, Ether, Acetale, Ketone, Ester, cyclischen Carbonate oder Alkanole, bevorzugt C₁- bis C₄-Alkanole und besonders bevorzugt Ethanol.

In einer bevorzugten Ausführungsform wird dieses Gemisch aus ethoxylierten Alkanolen und Oligo- und Polyethylenglykolen jedoch frei von Lösungsmitteln eingesetzt.

Das Adsorbens wird bezogen auf das Gemisch aus ethoxylierten Alkanolen und Oligo- und Polyethylenglykolen in Mengen von 0,5 bis 50 Gew%, bevorzugt 1 bis 33, besonders bevorzugt 2,5 bis 25 und ganz besonders bevorzugt 5 bis 20 Gew% eingesetzt.

Die Behandlung des Gemischs aus ethoxylierten Alkanolen und Oligo- und Polyethylenglykolen mit dem Adsorbens kann bei einer Temperatur von 0 bis 100 °C erfolgen, bevorzugt von 5 bis 80, besonders bevorzugt von 10 bis 50, ganz besonders bevorzugt von 15 bis 40 °C und insbesondere bei Umgebungstemperatur.

Insbesondere lonentauscher und Phenol-Formaldehyd-Harze als organische Polymere sind empfindlich gegen hohe Temperaturen, bevorzugt bleibt die Behandlung mindestens 30 °C unterhalb deren empfohlener maximaler Betriebstemperatur, besonders bevorzugt mindestens 40 und ganz besonders bevorzugt mindestens 50 °C.

Hingegen ist Kieselgel als anorganisches Produkt weitgehend temperaturstabil, so dass das Gemisch aus ethoxylierten Alkanolen und Oligo- und Polyethylenglykolen hier ausnahmsweise auch bei höheren Temperaturen als den oben angegebenen behandelt werden kann.

Der Druck, bei dem die erfindungsgemäße Behandlung ausgeführt wird, ist weniger relevant. Die Behandlung kann bei Unterdruck oder Überdruck bis zu 20 bar durchgeführt werden, bevorzugt wird die Behandlung bei Umgebungsdruck oder leichtem Überdruck bis zu 1,5 bar durchgeführt.

Das Gemisch aus ethoxylierten Alkanolen und Oligo- und Polyethylenglykolen wird dem Adsorbens für eine Dauer von 5 min bis 48 Stunden ausgesetzt, bevorzugt 10 min bis 24 Stunden, besonders bevorzugt 15 min bis 12 Stunden und ganz besonders bevorzugt 20 min bis 6 Stunden.

Um die Adsorption zu gewährleisten, wird das Gemisch aus ethoxylierten Alkanolen und Oligo- und Polyethylenglykolen wird dem Adsorbens in Kontakt gebracht, wobei man die flüssige Phase des Gemischs relativ zum festen Adsorbens bewegt. Dies kann beispielsweise durch Rühren oder Schütteln des Gemischs mit dem Adsorbens erfolgen. Um den Abrieb des Adsorbens zu verringern ist es bevorzugt, das Adsorbens in Schüttungen zu immobilisieren und die flüssige Phase durch diese Schüttungen zu bewegen. Dies kann beispielsweise in einem oder mehreren Rührreaktoren erfolgen, in denen das Adsorbens beispielsweise in Käfigen gehalten wird oder bevorzugt durch Schüttungen in Rohrreaktoren, durch die die flüssige Phase in geradem Durchgang oder in einem Umpumpkreislauf geführt wird.

Das Adsorbens kann im Reaktor sein als Vollraumreaktor oder Abschnittsreaktor (Hordenreaktor) angeordnet sein.

In einem Hordenreaktor wird das Adsorbens in ein- und demselben Apparat in mehrere aufeinanderfolgende Schüttungen (Horden) aufgeteilt, die einzeln thermostatiert sein können. Es ist also möglich, die Adsorptionstemperatur für jeden Abschnitt getrennt einzustellen, bevorzugt steigt die Temperatur im Verlauf der Behandlung an.

Die Behandlung kann kontinuierlich oder diskontinuierlich erfolgen, bevorzugt diskontinuierlich.

Da die Bewegung der flüssigen Phase am Adsorbens zu Abrieb führen kann oder das Adsorbens einen Anteil an kleinteiligem Feststoff enthalten kann, ist es bevorzugt die Oligo- und Polyethylenglykol-abgereicherten ethoxylierten Alkanole nach der Behandlung zu filtrieren. Bevorzugt erfolgt dies durch Filtration über ein Filter mit einer Porengrö-ße von beispielsweise bis zu 1 µm, besonders bevorzugt von 0,1 bis 0,8 und ganz besonders bevorzugt von 0,25 bis 0,6 µm.

Die Behandlung des Gemischs aus ethoxylierten Alkanolen und Oligo- und Polyethylenglykolen mit dem Adsorbens kann ein oder mehrmals, beispielsweise ein- bis fünfmal, bevorzugt ein bis dreimal erfolgen um geringe Gehalte an Oligo- und Polyethylenglykolen zu erzielen.

Nach Abtrennung des Adsorbens vom Gemisch kann das Adsorbens regeneriert und wiederverwendet werden.

Dies erfolgt beispielsweise durch Wäsche mit Wasser, Säuren, wie beispielsweise Salzsäure oder Schwefelsäure, oder Laugen, beispielsweise Natronlauge oder Kalilauge, und/oder Alkoholen, beispielsweise Monoethylenglykol oder Ethanol, bevorzugt Monoethylenglykol.

Dazu wird über das Adsorbens das mindestens 10fache bis zu dem 100fachen Volumen des Schüttungsvolumens (Bettvolumens, BV) der betreffenden Flüssigkeit geleitet um die adsorbierten Oligo- und Polyethylenglykole zu entfernen. Es kann auch zunächst mit einer Säure oder Base und anschließend mit Wasser gespült werden. Bei dem Einsatz des sauren lonentauschers als Adsorbens, wird anschließend das gewünschte Gegenion durch Neutralisation mit der jeweiligen Base bis zum gewünschten Neutralisationsgrad aufgebracht. Anschließend kann das Adsorbens im Vakuum bei erhöhter Temperatur getrocknet werden, beispielsweise organische Polymere bei Temperaturen um 50 °C und anorganische Stoffe bei Temperatur um 120 °C.

Durch die Durchführung des erfindungsgemäßen Verfahrensschrittes (II) ist es möglich, den Anfangsgehalt an Oligo- und Polyethylenglykolen in den ethoxylierten Alkanolen in der Regel um mindestens 10%, bevorzugt mindestens um 15, besonders bevorzugt um mindestens 20 und ganz besonders bevorzugt um mindestens 25% zu verringern.

Durch das erfindungsgemäße Verfahren ist es bei Wahl geeigneter Versuchsbedingungen möglich, den Gehalt an Oligo- und Polyethylenglykole auf nicht mehr als 2500 ppm zu senken, bevorzugt nicht mehr als 2000, besonders bevorzugt nicht mehr als 1500 und ganz besonders bevorzugt nicht mehr als 1000 ppm. Es lassen sich Gehalte an Oligo- und Polyethylenglykolen in den ethoxylierten Alkanolen von nicht mehr als 750 und sogar nicht mehr als 500 Gew.ppm erzielen.

Dies ist insbesondere dann der Fall, wenn die Verfahrensschritte (I) und (II) kombiniert werden und das nach Verfahrensschritte (I) erhaltene Reaktionsprodukt anschließend noch dem Verfahrensschritt (II) unterzogen wird.

### Verwendungen

Die nach dem erfindungsgemäßen Verfahren erhältlichen, bevorzugt erhaltenen, an Oligo- und Polyethylenglykolen abgereicherten ethoxylierten Alkanole können allgemein in allen Anwendungen eingesetzt werden, die typischerweise für derartige ethoxylierte Alkanole bekannt sind, die nicht abgereichert sind.

Diese können beispielsweise sein der Einsatz als
- Netzmittel
- Detergenz
- Dispergiermittel
- Lösungsvermittler
- zur Textilreinigung und Textilfärbung
- Intermediat zur Synthese anionischer Phosphate, Sulfate oder Ethercarboxylaten
- als Adjuvans in Agroformulierungen: Hilfsmittel zur Verbesserung der

- - Haftung
- - Retention (engl. spray retention aid)
- - Verteilung
- - Penetration
- - Benetzungshilfsmittel (Spreizmittel, engl. spreading aid) von Spritzbrühen.

Mit Vorzug werden die ethoxylierten Alkanole jedoch in solchen Anwendungen eingesetzt, in denen ein verringerter Gehalt an Oligo- und Polyethylenglykolen gefordert wird.

Dies können beispielsweise Emulgatoren in w/o-Emulsionen sein.

Mit besonderem Vorzug werden diese ethoxylierten Alkanole mit einem verringerten Gehalt an Oligo- und Polyethylenglykolen eingesetzt als oberflächenaktives Hilfsmittel zur Verteilung, besonders Dispergierung von Wasser in Kraftstoffen, ausgewählt aus der Gruppe bestehend aus Benzin, Diesel, marinen Kraftstoffen und Luftfahrtkraftstoffen, bevorzugt Diesel- oder Luftfahrtkraftstoffe, besonders bevorzugt Luftfahrtkraftstoffe, besonders Turbinenkraftstoffe.

Mit diesen ethoxylierten Alkanolen ist es möglich, einen Gehalt an Wasser von mindestens 50 ppm in flüssigen Kohlenwasserstoffkraftstoffen in stabilen Mikroemulsionen mit einer Tröpfchengröße von nicht mehr als 0,25 µm zu verteilen. Dies hat besonders den Zweck, bei Abkühlung bis zu minus 50°C die Bildung von Eispartikeln in dem Kraftstoff zu verringern oder zu unterdrücken. Zudem wird die Bildung einer separierten Wasserphase am Tankboden von Flugzeugen verhindert, die u.a. zu unerwünschter Korrosion infolge von Biofilmbildung führt.

Dazu können die ethoxylierten Alkanole allein oder bevorzugt in Kombination mit einem (C₈-C₂₄)alkylamido (C₁-C₆)alkyl betain eingesetzt werden.

Eine derartige Anwendung und entsprechende Gemische sind beschrieben in WO 2011/045334 A1.

Zur Verringerung der Eiskristallbildung werden dem Kraftstoff bevorzugt folgende Mengen zugesetzt:
- von 45 bis 4575 ppm, bevorzugt 45 bis 500 ppm mindestens eines ethoxylierten Alkanols und/oder
- von 0 bis 425 ppm, z.B. 1 bis 425 ppm, bevorzugt 1 bis 5 ppm mindestens eines (C₈-C₂₄)alkylamido (C₁-C₆)alkyl betains.

Bei dem mindestens einen (C₈-C₂₄)alkylamido (C₁-C₆)alkyl betain kann es sich bevorzugt um Cocoamidopropyl betain handeln.

Zusätzlich zu diesem oberfächenaktiven Mittel oder Emulgator kann der Kraftstoff noch eines oder mehrere der folgenden zusätzlichen Komponenten enthalten: Statikdissipatoren, Antioxidantien, Metalldeaktivatoren, Lecksuchadditive, Korrosionsinhibitoren, Schmiermittel, Alkohole, Glykole und andere Standardprodukte, die dem Fachmann bekannt sind, sowie Verunreinigungen wie Fettsäuremethylester.

Die ethoxylierten Alkanole werden zumeist in Form von flüssigen Konzentraten eingesetzt, im wesentlichen enthaltend
0,1 bis 10 Gew% mindestens eines (C₈-C₂₄)alkylamido (C₁-C₆)alkyl betains, bevorzugt Cocoamidopropyl betain 30 bis 95 Gew% mindestens eines ethoxylierten Alkanol, mit einem verringerten Gehalt an Oligo- und Polyethylenglykolen
0 bis 20 Gew% mindestens eines Glycol-basierten Löslichkeitsvermittlers, bevorzugt Ethylenglykol, und
0 bis 65 Gew% mindestens eines organischen Lösungsmittels, bevorzugt Ethanol.

Analog WO 2011/045334 A1 ist eine bevorzugte Zusammensetzung des flüssigen Konzentrats
2 Teile Cocoamidopropyl betain
60 Teile mindestens eines ethoxylierten Alkanol, mit einem verringerten Gehalt an Oligo- und Polyethylenglykolen
4 Teile Ethylenglykol, und
34 Teile Ethanol.

Die Turbinenkraftstoffe enthalten eine Hauptmenge eines flüssigen Turbinenkraftstoffs, wobei es sich beispielsweise um einen in der zivilen oder militärischen Luftfahrt üblichen Turbinenkraftstoff handelt. Dazu zählen beispielsweise Kraftstoffe der Bezeichnung Jet Fuel A, Jet Fuel A-1, Jet Fuel B, Jet Fuel JP-4, JP-5, JP-7, JP-8 und JP-8+100. Jet A und Jet A-1 sind kommerziell erhältliche Turbinenkraftstoffspezifikationen auf Kerosinbasis. Die zugehörigen Normen sind ASTM D 1655 sowie DEF STAN 91-91. Jet B ist ein weiter geschnittener Kraftstoff auf Basis von Naphtha- und Kerosinfraktionen. JP-4 ist äquivalent zu Jet B. JP-5, JP-7, JP-8 und JP-8+100 sind militärische Turbinenkraftstoffe, wie sie beispielsweise von der Marine und Luftwaffe eingesetzt werden. Zum Teil bezeichnen diese Normen Formulierungen, die bereits weitere Additive, wie Korrosionsinhibitoren, Vereisungsinhibitoren, statische Dissipatoren, etc. enthalten.

Dem Turbinenkraftstoff können weitere an sich bekannten Zusatzstoffe zugegeben werden. Geeignete Zusatzstoffe, die in der Turbinenkraftstoffzusammensetzung enthalten sein können, umfassen üblicherweise Detergenzien, Korrosionsinhibitoren, schwefelfreie Antioxidantien wie sterisch gehinderte tert.-Butylphenole, N-Butylphenylendiamine oder N,N'-Diphenyl-amin und Derivate hiervon, Metalldesaktivatoren wie N,N'-Disalicyliden-1,2-diamino-propan, Lösungsvermittler, Antistatika wie Stadis 450, Biocide, Anti-Icing-Mittel wie Diethylen-glykolmethylether oder Triethylenglykolmethylether, sowie Mischungen der genannten Zusatzstoffe.

Spezifikationen für Turbinenkraftstoff sowie zugelassene Zusatzstoffe mit den jeweiligen Dosierungen sind aufgeführt in ASTM D1655-24.

Die Mikroemulsionen können hergestellt werden durch Mischen von
- 99,995 bis 99,999 Teile, z.B. 99,998 Teile, eines Kraftstoffs, z.B. einem Turbinenkraftstoff und
- etwa 0,0001 bis etwa 0,01 Teile, z.B. 0,025 Teile, Emulgatorzusammensetzung, wobei die Emulgatorzusammensetzung umfassen

- - mindestens eines (C₈-C₂₄)alkylamido (C₁-C₆)alkyl betains, bevorzugt Cocoamidopropyl betain und
- - mindestens eines ethoxylierten Alkanols, mit einem verringerten Gehalt an Oligo- und Polyethylenglykolen,
wobei sich die Angaben der Teile stets auf das Volumen beziehen.

Demzufolge ist ein weiterer Gegenstand der vorliegenden Erfindung ein Verfahren zur Verteilung von Wasser in Kraftstoffen, mit Hilfe von ethoxylierten Alkanolen der Formel

R¹-O-[-CH₂-CH₂-O-]ₘ-H

worin
R¹ geradkettiges oder verzweigtes C₈-C₁₄-Alkyl, bevorzugt C₈-C₁₃-Alkyl, besonders bevorzugt C₉-C₁₃-Alkyl, und ganz besonders bevorzugt C₉-C₁₁-Alkyl und
m eine rationale Zahl von 1 bis 3
mit einem verringerten Gehalt an Oligo- und Polyethylenglykolen der Formel

   HO-[-CH₂-CH₂-O]ₙ-H
worin n eine rationale Zahl von mindestens 2, bevorzugt von 2 bis 30 und besonders bevorzugt von 2 bis 20 ist,
worin man
   (I) mindestens einen Alkanol R¹OH mit mindestens m Äquivalenten Ethylenoxid in Gegenwart mindestens eines (Erd)Alkalimetallalkoholats eines Alkanols R²OH umsetzt,
      wobei R² ein C₁- bis C₄-Alkylrest oder R¹ sein kann,
      und/oder man
   (II) ein Gemisch mindestens eines ethoxylierten Alkanols der Formel

      R¹-O-[-CH₂-CH₂-O-]ₘ-H

      mit Oligo- und Polyethylenglykolen der Formel

         HO-[-CH₂-CH₂-O]ₙ-H
      mit mindestens einem Adsorbens behandelt, ausgewählt aus der Gruppe bestehend aus

   (i) Phenol-Formaldehyd-Harzen,
   (ii) Kieselgel und
   (iii) sauren Ionentauschern in der Kalium-Form,
(iii) das so erhaltene Oligo- und Polyethylenglykol-abgereicherte, ethoxylierte Alkanol in einen Kraftstoff mischt, ausgewählt aus der Gruppe bestehend aus Benzin, Diesel, marine Kraftstoffe und Luftfahrtkraftstoffe.

### Beispiele

### Material und Methoden

Gemisch von primären C₉-C₁₁-Alkanolen, Molekulargewicht 158 -164 g/mol, OH-Zahl 342 - 355 mg KOH/g (Neodol^{®} 91 von Shell, CAS Nr. 66455-17-2).

Im Mittel 2,5-fach ethoxyliertes Gemisch von C₉-C₁₁-Alkanolen (Synperonic^{™} 91/2.5 von Croda, CAS 68439-46-3).

PEG-Gehalte wurden mittels HPLC-MS gegen PEG-Standard gemessen. Es wurde PEG-Standard des jeweiligen Molmassenbereichs verwendet, der in der Probe mittels MS bestimmt wurde.

Die Hydroxylzahlen (OH Zahlen) wurden bestimmt per DIN 53240-2 - 2007-11

### Vergleichsbeispiel 1: C9-C11-Alkohol, ethoxyliert mit 2,5 mol Ethylenoxid pro Mol, katalysiert mit wässrigem Kaliumhydroxid

In einem 5-I-Autoklaven wurden 1601,0 g C9-C11-Alkohole und 8,1 g Kaliumhydroxid (50 Gew.-% in Wasser) bei Raumtemperatur gelagert. Es wurde ein Vakuum von < 50 mbar angelegt und auf 95 °C erhitzt. Bei dieser Temperatur und diesem Druck wurde die Mischung für 15 min entwässert.

Das Gefäß wurde dreimal mit Stickstoff gespült und auf 175°C erhitzt. Innerhalb von 6 Stunden wurden 1108,2 g Ethylenoxid zugegeben. Zur Vervollständigung der Reaktion wurde die Mischung zusätzliche 3 Stunden bei 175°C nachreagieren gelassen. Die Reaktionsmischung wurde mit Stickstoff gestrippt und flüchtige Verbindungen im Vakuum bei 80°C entfernt.

Nach Filtration wurden 2715,0 g eines hellgelben Öls erhalten (Hydroxylzahl: 210,8 mg KOH/g). Der Gehalt an Polyethylenglykolen (PEG) wurde mittels HPLC bestimmt: 1,67 Gew.% (MS-Bestimmung).

### Beispiel 1: C9-C11 Alkohol, ethoxyliert mit 2,5 Mol Ethylenoxid pro Mol, katalysiert mit Natrium-C9-C11-Alkoxid, Reaktionstemperatur 120 °C

In einem 1,0l Vierhalskolben mit Rückflusskühler und Stickstoffeinlass wurden 636,4 g C9-C11-Alkohol bei 60 °C gegeben. Innerhalb von 10 Minuten wurden portionsweise 1,8 g Natriummetall hinzugefügt. Die Temperatur wurde auf 90 °C erhöht und die Mischung wurde 0,5 Stunden lang gerührt, bis das Natrium vollständig gelöst war.

In einem 2 l Druckgefäß wurden bei Raumtemperatur 636,4 g der erhaltenen Lösung von Natrium-C9-C11-Alkoxid in C9-C11-Alkohol gefüllt. Das Gefäß wurde dreimal mit Stickstoff gespült und auf 120 °C erhitzt. Innerhalb von 4 Stunden wurden 440,5 g Ethylenoxid hinzugefügt. Um die Reaktion abzuschließen, wurde die Mischung weitere 6 Stunden lang bei 120 °C nachreagiert. Die Reaktionsmischung wurde mit Stickstoff gestrippt und flüchtige Verbindungen im Vakuum bei 80 °C entfernt.

Nach der Filtration wurden 1084,0 g eines hellgelblichen Öls erhalten (Hydroxylzahl: 210,7 mg KOH/g). Der Gehalt an PEG wurde per HPLC bestimmt: 0,06 Gew%.

### Beispiel 2: C9-C11-Alkohol, ethoxyliert mit 2,5 Mol Ethylenoxid pro Mol, katalysiert mit Natrium-C9-C11-Alkoxid, Reaktionstemperatur 175°C

In einem 1,0l Vierhalskolben mit Rückflusskühler und Stickstoffeinlass wurden 850,0 g C9-C11-Alkohol bei 60°C gegeben. Innerhalb von 10 Minuten wurden 2,2 g Natrium in Portionen zugegeben. Die Temperatur wurde auf 90°C erhöht und die Mischung wurde für 0,75 Stunden gerührt, bis das Natrium vollständig gelöst war.

In einem 2I Autoklav wurden 795,5 g der erhaltenen Lösung von Natrium-C9-C11-Alkoxid in C9-C11-Alkohol bei Raumtemperatur gegeben. Das Gefäß wurde dreimal mit Stickstoff gespült und auf 175°C erhitzt. Innerhalb von 3 Stunden wurden 550,7 g Ethylenoxid zugegeben. Zur vollständigen Reaktion wurde die Mischung weitere 3 Stunden bei 175°C nachreagieren gelassen. Die Reaktionsmischung wurde mit Stickstoff entgast und flüchtige Verbindungen bei 80°C im Vakuum entfernt.

Nach der Filtration wurden 1342,0 g eines hellgelblichen Öls erhalten (Hydroxylwert: 210,0 mg KOH/g). Der Gehalt an PEG wurde per HPLC bestimmt: 0,39 Gew.% (MS-Bestimmung).

### Beispiel 3: C9-C11-Alkohol, ethoxyliert mit 2,5 Mol Ethylenoxid pro Mol, katalysiert mit Natrium-C9-C11-Alkoxid, Reaktionstemperatur 175 °C, Vor-Trocknung des C9-C11-Alkohols

In einem Glaskolben wurden 850,0 g C9-C11-Alkohol und 8,5 g Natriumsulfat gegeben und über Nacht bei Raumtemperatur gerührt. Die obere Phase wurde abgetrennt und 820,0 g dieses vorgetrockneten C9-C11-Alkohols wurden bei 60 °C in einen 1,0-l-4-Hals-Kolben mit Rückflusskühler und Stickstoffeinlass gegeben. Innerhalb von 10 Minuten wurden 2,1 g Natriummetall portionsweise zugegeben. Die Temperatur wurde auf 90 °C erhöht, und die Mischung wurde für 0,75 Stunden gerührt, bis das Natrium vollständig aufgelöst war.

In einem 2-I-Autoklav wurden 797,5 g der erhaltenen Lösung von Natrium-C9-C11-Alkoxid in C9-C11-Alkohol bei Raumtemperatur eingebracht. Das Gefäß wurde dreimal mit Stickstoff gespült und auf 175 °C erhitzt. Innerhalb von 3 Stunden wurden 550,7 g Ethylenoxid zugegeben. Zur vollständigen Reaktion wurde die Mischung zusätzliche 3 Stunden bei 175 °C nachreagieren gelassen. Die Reaktionsmischung wurde mit Stickstoff gestrippt und flüchtige Verbindungen im Vakuum bei 80 °C entfernt.

Nach Filtration wurden 1334,0 g eines hellgelben Öls erhalten (Hydroxylwert: 207,3 mg KOH/g). Der Gehalt an PEG wurde per HPLC bestimmt: 0,47 Gew.% (MS-Bestimmung).

### Beispiel 4: C9-C11-Alkohol, ethoxyliert mit 2,5 Mol Ethylenoxid pro Mol, katalysiert mit Natriummethoxid, Reaktionstemperatur 175 °C

In einem 5-Liter-Autoklav wurden 2683,8 g C9-C11-Alkohol und 27,0 g Natriummethoxid (25 Gew.-% in Methanol) bei Raumtemperatur platziert. Ein Vakuum von < 50 mbar wurde angelegt und die Mischung auf 110 °C erhitzt. Die Mischung wurde für 2 Stunden bei 110 °C und Vakuum unter 50 mbar entwässert. Das Gefäß wurde dreimal mit Stickstoff gespült und auf 175 °C erhitzt. Innerhalb von 12 Stunden wurden 1857,8 g Ethylenoxid zugegeben. Zur Vervollständigung der Reaktion wurde die Mischung zusätzlich für 3 Stunden bei 175 °C nachreagieren gelassen. Die Reaktionsmischung wurde mit Stickstoff gestrippt und flüchtige Verbindungen wurden bei 80 °C unter Vakuum entfernt.

Nach Filtration wurden 2690,0 g einer leicht gelblichen Flüssigkeit erhalten (Hydroxylwert: 210,8 mg KOH/g). Der Gehalt an PEG wurde per HPLC bestimmt: 0,13 Gew.-% (MS-Bestimmung).

### Beispiel A - Abtrennung von PEG aus 2,5-fach ethoxylierten C₉-C₁₁-Alkanolen mit Adsorbentien

100 g eines Gemischs aus ethoxylierten linearen C9/C11 Alkoholen mit einem durchschnittlichen Ethoxylierungsgrad von 2,5 wurden mit 2 g Adsorbens 24 Stunden bei Raumtemperatur in Glasflaschen geschüttelt. Das Adsorbens wurde dann mit einem 0,45 µm Membranfilter abgetrennt und der PEG-Gehalt gemessen. Der PEG-Gehalt des eingesetzten Alkohols betrug 0,82 %.

Die Adsorbentien wurden wie folgt vorbereitet:
Natriumbentonit und Kieselgel wurden bei 120 °C im Vakuum getrocknet.

Phenol-Formaldehyd-Harz: Wäsche mit Wasser und Entfernung des Wassers auf Filterpapier. Anschließend Trocknung bei 50 °C im Vakuum

Beladung des sauren lonentauschers mit Kalium:
Ein Glasrohr (ca. 35 ml) wurde mit Purolite C150S gefüllt und mit 105 ml demineralisiertem Wasser, 350 ml 10% Kaliumchlorid in demineralisiertem Wasser und schließlich 105 ml demineralisiertem Wasser gespült. Überschüssiges Wasser wurde auf einem Filterpapier entfernt und das Adsorbens im Vakuum bei 50°C getrocknet.

Beladung des sauren lonentauschers mit Barium:
Ein Glasrohr (ca. 35 ml) wurde mit Purolite C150S gefüllt und mit 105 ml demineralisiertem Wasser, 350 ml 10% Bariumchlorid in demineralisiertem Wasser und schließlich 105 ml demineralisiertem Wasser gespült. Überschüssiges Wasser wurde auf einem Filterpapier entfernt und das Adsorbens im Vakuum bei 50°C getrocknet.

Tabelle A: Abreicherung des PEG-Gehalts im ethoxylierten Alkohol nach Behandlung mit Adsorbens

| **Adsorbens** | | **PEG [%]** |
|---|---|---|
| - | Blindwert | 0,82 |
| Natriumbentonit (Vergleich) | Tonmineral | 0,72 |
| ZeoPrep 60A 60-200 µm | Kieselgel | 0,67 |
| Purolite C150S in K-Form, feucht | Saurer lonentauscher mit Sulfonsäuregruppen auf Styrol/Divinylbenzol-Matrix | 0,67 |
| Purolite C150S in Ba-Form, feucht (Vergleich) | Saurer lonentauscher mit Sulfonsäuregruppen auf Styrol/Divinylbenzol-Matrix | 0,75 |
| Amberlite XAD761, feucht | Phenol-Formaldehyd-Harz | 0,64 |
| Amberlite XAD761, trocken | Phenol-Formaldehyd-Harz | 0,55 |

### Beispiel B - Abtrennung von PEG aus 2,5-fach ethoxylierten C₉-C₁₁-Alkanolen mit Adsorbentien, Variation der Menge an Adsorbens

50 g eines Gemischs aus ethoxylierten linearen C9/C11 Alkoholen mit einem durchschnittlichen Ethoxylierungsgrad von 2,5 wurden mit zusätzlichem PEG versetzt und für 24 Stunden bei Raumtemperatur in Glasflaschen mit 0,5-10 g Adsorbentien (siehe Tabelle) geschüttelt. Das Adsorbens wurde dann mit einem Membranfilter abgetrennt und der PEG-Gehalt wurde gemessen. Der PEG-Gehalt des eingesetzten Alkohols betrug 2,55 %.

**Tabelle B**

| **Behandlung** | **Menge Adsorbens** | **PEG Gehalt (%)** | **PEG entfernt (g)** |
|---|---|---|---|
| Ausgangsmischung | - | 2,55 | - |
| Purolite C105S K Form (feucht) | 0,5 g | 2,40 | 0,08 |
| | 1,1 g | 2,24 | 0,16 |
| | 2,1 g | 1,98 | 0,29 |
| | 5,2 g | 1,50 | 0,53 |
| | 10,2 g | 1,02 | 0,76 |
| ZeoPrep 60 60-200 (trocken) | 0,5 g | 2,39 | 0,08 |
| | 1,0 g | 2,23 | 0,16 |
| | 2,0 g | 2,03 | 0,26 |
| | 5,1 g | 1,51 | 0,52 |
| | 10,0 g | 1,09 | 0,73 |
| Amberlite XAD761 (feucht) | 0,5 g | 2,20 | 0,18 |
| | 1,0 g | 1,95 | 0,30 |
| | 2,1 g | 1,59 | 0,53 |
| | 4,6 g | 0,78 | 0,90 |
| | 10,0 g | 0,19 | 1,18 |

### Beispiel C

88 g eines Gemischs aus ethoxylierten linearen C9/C11 Alkoholen mit einem durchschnittlichen Ethoxylierungsgrad von 2,5 mit einem durch Optimierung der Synthese niedrigen Gehalt am PEG von 600 ppm wurde mit 10 g trockenem Amberlite XAD761 für 24 Stunden geschüttelt. Das Adsorbens wurde abfiltriert, der PEG-Gehalt wurde zu 60 ppm bestimmt.

### Beispiel D

Eine Glassäule (Innendurchmesser 2 cm, Länge 50 cm) wurde mit einem Bettvolumen (BV) von 157 ml AmberLite XAD761 gefüllt und die in der Tabelle aufgeführten Prozessschritte wurden durchgeführt.

Die Flüssigkeiten wurden bei Raumtemperatur in aufwärtsgerichteter Richtung durch die Säule gepumpt, Proben wurden entnommen und analysiert.

| **Prozessschritt** | **Medium** | **Volumen, Fließgeschwindigkeit** |
|---|---|---|
| Wässern | Wasser | 10 BV, 2,5 BV/h |
| Wäsche | Monoethylenglykol | 20 BV, 2,5 BV/h |
| Spülen | Wasser | 10 BV, 2,5 BV/h |
| Behandlung | Ethoxylat | 4 BV, 0,5 BV/h |
| Verdrängung / Regeneration 1 | Monoethylenglykol | 4 BV, 1 BV/h |
| Regeneration 2 | Wasser | 4 BV, 1 BV/h |
| Regeneration 3 | 2% Schwefelsäure (aq) | 4 BV, 1 BV/h |
| Spülen | Wasser | 10 BV, 2,5 BV/h |

Das eingesetzte Ethoxylat wies eine APHA Farbzahl von 18 und einen PEG-Gehalt von 1376 ppm auf, der in den ersten beiden Fraktionen (= 2 BV) auf durchschnittlich 142 ppm, in den letzten beiden Fraktionen auf 194 ppm abgereichert werden konnte. Die letzten beiden Fraktionen wiesen eine APHA-Farbzahl von 74 auf.

Im Regenerationsschritt 1 wiesen die ersten beiden Fraktionen des Eluats einen PEG-Gehalt von 865 ppm, die letzten beiden 1241 ppm auf.

Das Eluat wies am Ende des Regenerationsschritts 3 einen PEG-Gehalt < 50 ppm auf.

Der Anstieg der Farbzahl ist zurückzuführen auf ein farbliches Ausbluten des Harzes, das durch die Vorbehandlung mit Monoethylenglykol nicht vollständig unterdrückt bzw. entfernt werden kann.

### Beispiel E

Eine Glassäule (Innendurchmesser 2 cm, Länge 50 cm) wurde mit einem Bettvolumen (BV) von 157 ml AmberLite XAD761 gefüllt und die in der Tabelle aufgeführten Prozessschritte wurden durchgeführt.

Die Flüssigkeiten wurden bei Raumtemperatur in aufwärtsgerichteter Richtung durch die Säule gepumpt, Proben wurden entnommen und analysiert.

| **Prozessschritt** | **Medium** | **Volumen, Fließgeschwindigkeit** |
|---|---|---|
| Wässern | Wasser | 10 BV, 2,5 BV/h |
| Wäsche | Ethanol | 20 BV, 2,5 BV/h |
| Spülen | Wasser | 10 BV, 2,5 BV/h |
| Behandlung | Ethoxylat | 4 BV, 0,5 BV/h |
| Verdrängung / Regeneration 1 | Ethanol | 4 BV, 1 BV/h |
| Regeneration 2 | Wasser | 4 BV, 1 BV/h |
| Regeneration 3 | 2% NaOH(aq) | 4 BV, 1 BV/h |
| Spülen | Wasser | 10 BV, 2,5 BV/h |

Das eingesetzte Ethoxylat wies eine APHA Farbzahl von 18 und einen PEG-Gehalt von 1376 ppm auf, der in den ersten beiden Fraktionen (2 BV) auf durchschnittlich 50 ppm, in den letzten beiden Fraktionen auf 281 ppm abgereichert werden konnte. Die letzten beiden Fraktionen wiesen eine APHA-Farbzahl von 10 auf.

Im Regenerationsschritt 1 wiesen die ersten beiden Fraktionen des Eluats einen PEG-Gehalt von 369 ppm, die letzten beiden 489 ppm auf.

Das Eluat wies am Ende des Regenerationsschritts 3 einen PEG-Gehalt < 50 ppm auf.

Somit ist Ethanol zur Entfärbung des Harzes besser geeignet als Monoethylenglykol, wohingegen Monoethylenglykol besser in der Lage ist, das adsorbierte PEG wieder vom Harz zu verdrängen.

### Beispiel F

Eine Glassäule (Innendurchmesser 2 cm, Länge 50 cm) wurde mit einem Bettvolumen (BV) von 157 ml AmberLite XAD761 gefüllt und die in der Tabelle aufgeführten Prozessschritte wurden durchgeführt.

Die Flüssigkeiten wurden bei Raumtemperatur in aufwärtsgerichteter Richtung durch die Säule gepumpt, Proben wurden entnommen und analysiert.

| **Prozessschritt** | **Medium** | **Volumen, Fließgeschwindigkeit** |
|---|---|---|
| Wässern | Wasser | 10 BV, 2,5 BV/h |
| Wäsche | Ethanol | 10 BV, 2,5 BV/h |
| Wäsche | Kerosin (Jet A-1) | 20 BV, 2,5 BV/h |
| Spülen | Ethanol | 10 BV, 2,5 BV/h |
| Spülen | Wasser | 10 BV, 2,5 BV/h |
| Behandlung | Ethoxylat | 4 BV, 0,5 BV/h |
| Verdrängung / Regeneration 1 | Kerosin (Jet A-1) | 4 BV, 1 BV/h |
| Spülen | Ethanol | 10 BV, 2,5 BV/h |
| Spülen | Wasser | 10 BV, 2,5 BV/h |

Das eingesetzte Ethoxylat wies eine APHA Farbzahl von 18 und einen PEG-Gehalt von 1376 ppm auf, der in den ersten beiden Fraktionen (2 BV) auf durchschnittlich < 50 ppm, in den letzten beiden Fraktionen auf 50 ppm abgereichert werden konnte.

Im Regenerationsschritt wiesen die ersten beiden Fraktionen des Eluats einen PEG-Gehalt von 185 ppm, die letzten beiden < 50 ppm auf.

## Patentansprüche

1. Verfahren zur Herstellung von ethoxylierten Alkanolen der Formel
R¹-O-[-CH₂-CH₂-O-]ₘ-H
worin
R¹ geradkettiges oder verzweigtes bevorzugt geradkettiges C₈-C₁₄-Alkyl und
m eine rationale Zahl von 1 bis 3
ist
mit einem niedrigen Gehalt an Oligo- und Polyethylenglykolen der Formel
HO-[-CH₂-CH₂-O]ₙ-H
worin n eine rationale Zahl von mindestens 2, bevorzugt von 2 bis 20 ist,
**dadurch gekennzeichnet, daß** man
(I) mindestens einen Alkanol R¹OH mit mindestens m Äquivalenten Ethylenoxid in Gegenwart mindestens eines (Erd)Alkalimetallalkoholats eines Alkanols R²OH umsetzt,
wobei R² ein C₁- bis C₄-Alkylrest oder R¹ sein kann,
und/oder man
(II) ein Gemisch mindestens eines ethoxylierten Alkanols der Formel
R¹-O-[-CH₂-CH₂-O-]ₘ-H
mit Oligo- und Polyethylenglykolen der Formel
HO-[-CH₂-CH₂-O]ₙ-H
mit mindestens einem Adsorbens behandelt, ausgewählt aus der Gruppe bestehend aus
(i) Phenol-Formaldehyd-Harzen,
(ii) Kieselgel und
(iii) sauren Ionentauschern in der Kalium-Form.

2. Verfahren gemäß Anspruch 1, **dadurch gekennzeichnet, daß** in Schritt (I) der Wassergehalt im Alkanol R¹OH, dem (Erd)Alkalimetallalkoholat und dem Alkanol R²OH nicht mehr als 1000 Gew.ppm beträgt.

3. Verfahren gemäß Anspruch 1 oder 2, **dadurch gekennzeichnet, daß** das (Erd)Alkalimetall ausgewählt aus der Gruppe bestehend aus Natrium, Kalium, Magnesium und Calcium.

4. Verfahren gemäß einem der vorstehenden Ansprüche, **dadurch gekennzeichnet, daß** für den Fall R² = R¹ das (Erd)Alkalimetallalkoholat des Alkanols R²OH durch Umsetzung des Alkanols R¹OH mit metallischem (Erd)Alkalimetall erhalten wird.

5. Verfahren gemäß einem der Ansprüche 1 bis 3, **dadurch gekennzeichnet, daß** man dem Alkanol R¹OH ein (Erd)Alkalimetallalkoholat des Alkanols R²OH hinzugibt und das Alkanol R²OH aus dem Gleichgewicht entfernt.

6. Verfahren gemäß einem der vorstehenden Ansprüche, **dadurch gekennzeichnet, daß** es sich bei dem Adsorbens in Schritt (II) um mindestens ein Phenol-Formaldehyd-Harz handelt, das einen Porendurchmesser von 400 bis 800 Ängström aufweist.

7. Verfahren gemäß einem der Ansprüche 1 bis 5, **dadurch gekennzeichnet, daß** es sich bei dem Adsorbens in Schritt (II) um mindestens ein Kieselgel mit einer Porengröße von 4 bis 9 nm handelt.

8. Verfahren gemäß einem der Ansprüche 1 bis 5, **dadurch gekennzeichnet, daß** es sich bei dem Adsorbens in Schritt (II) um mindestens einen sauren lonentauscher mit Sulfonsäuregruppen mit einer Kapazität an sauren Gruppen von 1 bis 5 eq/l handelt, dessen saure Gruppen zu mindestens 10% ein Kaliumion als Gegenion tragen.

9. Verwendung von Oligo- und Polyethylenglykol-abgereicherten ethoxylierten Alkanolen erhalten nach einem der vorstehenden Verfahren als
- Netzmittel
- Detergenz
- Dispergiermittel
- Lösungsvermittler
- zur Textilreinigung und Textilfärbung
- Intermediat zur Synthese anionischer Phosphate, Sulfate oder Ethercarboxylaten
- als Adjuvans in Agroformulierungen: Hilfsmittel zur Verbesserung der
- - Haftung
- - Retention (engl. spray retention aid)
- - Verteilung
- - Penetration
- - Benetzungshilfsmittel (Spreizmittel, engl. spreading aid) von Spritzbrühen.

10. Verwendung von Oligo- und Polyethylenglykol-abgereicherten ethoxylierten Alkanolen erhalten nach einem Verfahren gemäß einem der Ansprüche 1 bis 8 als Emulgatoren in w/o-Emulsionen.

11. Verwendung von Oligo- und Polyethylenglykol-abgereicherten ethoxylierten Alkanolen erhalten nach einem Verfahren gemäß einem der Ansprüche 1 bis 8 zur Verteilung von Wasser in Kraftstoffen, besonders Benzin, Diesel, marine Kraftstoffe und Luftfahrtkraftstoffe.

12. Verfahren zur Verteilung von Wasser in Kraftstoffen, mit Hilfe von ethoxylierten Alkanolen der Formel
R¹-O-[-CH₂-CH₂-O-]ₘ-H
worin
R¹ geradkettiges oder verzweigtes C₈-C₁₄-Alkyl und
m eine rationale Zahl von 1 bis 3
mit einem verringerten Gehalt an Oligo- und Polyethylenglykolen der Formel
HO-[-CH₂-CH₂-O]ₙ-H
worin n eine rationale Zahl von mindestens 2, bevorzugt von 2 bis 20 ist,
worin man ein ethoxyliertes Alkanol der Formel
R¹-O-[-CH₂-CH₂-O-]ₘ-H
gemäß einem der vorstehenden Ansprüche herstellt und das so erhaltene Oligo- und Polyethylenglykolarme, ethoxylierte Alkanol in einen Kraftstoff mischt, ausgewählt aus der Gruppe bestehend aus Benzin, Diesel, marine Kraftstoffe und Luftfahrtkraftstoffe.

13. Kraftstoff, enthaltend ein Oligo- und Polyethylenglykol-abgereichertes, ethoxyliertes Alkanol erhalten gemäß einem Verfahren gemäß einem der Ansprüche 1 bis 8.
